# EUROPÄISCHE PATENTSCHRIFT

(11) **EP 0 896 225 B1**
(45) Veröffentlichungstag und Bekanntmachung des Hinweises auf die Patenterteilung: **15.01.2003**
(21) Anmeldenummer: 98114516.2
(22) Anmeldetag: 03.08.1998
(51) Int. Cl.: G01P 1/04

(54) **Einrichtung zur Erfassung der Drehzahl, insbesondere eines Kraftfahrzeugmotors**
Device for detecting rotational speed, in particular of an automobile engine
Dispositif de détection de la vitesse de rotation, notamment d'un moteur d'automobile

(30) Priorität: 08.08.1997 DE 19734305
(43) Veröffentlichungstag der Anmeldung: 10.02.1999
(73) Patentinhaber: Siemens Aktiengesellschaft, 80333 München (DE)
(72) Erfinder: Stotz, Oliver, 35789 Weilmünster (DE)

(56) Entgegenhaltungen:
- EP-A- 0 282 346
- EP-A- 0 551 539
- DE-A- 4 040 287
- FR-A- 2 662 503

## Beschreibung

Die Erfindung bezieht sich auf eine Einrichtung zur Erfassung der Drehzahl, zur Befestigung an einer Getriebeeinheit, insbesondere eines Kraftfahrzeugmotors, mit einem Gehäuse, in dessen Innenraum ein Ringmagnet mit am Umfang verteilt angeordneten Dauermagnetpolen um eine Drehwelle antreibbar gelagert ist, die mit einem im Gehäuse angeordneten magnetempfindlichen Sensor zusammenwirken, wobei die Drehwelle an ihrem freien Ende mit einem axialen Antriebszapfen versehen ist, der formschlüssig mit einem freien Ende einer axial zur Drehwelle verlaufenden Antriebswelle verbindbar ist, die drehbar in der Getriebeeinheit gelagert ist und an ihrem freien Ende ein Antriebszahnrad aufweist.

Aus der EP 0 551 539 B1 ist ein Drehimpulsgenerator mit einem Gehäuse bekannt, das eine sich darin in Längsrichtung erstreckende Bohrung aufweist, in der eine Drehwelle geführt wird, die sich entlang der Bohrung des Gehäuses erstreckt ohne eine Wandung der Bohrung zu berühren. Ein Antriebszahnrad ist mit einem Ende der Drehwelle verbunden, so daß das Zahnrad und die Drehwelle um die Achse der Drehwelle rotieren können. Ein in der Bohrung gelagerter zylindrischer Halter ist mit dem anderen Ende der Drehwelle verbunden, um sich mit dieser zu drehen, und ruht in einer Lagerbuchse, die zwischen der Wandung der Bohrung und dem zylindrischen Halter angeordnet ist. Der Drehimpulsgenerator umfaßt weiterhin eine Geschwindigkeitserfassungseinrichtung zum Erzeugen eines Informationssignals, welches die Umdrehungsgeschwindigkeit der Drehwelle repräsentiert. Ein besonderer Nachteil dieser Lösung besteht darin, das der die Drehwelle aufnehmende Halter in einer metallischen Lagerbuchse in der Bohrung des Gehäuses gelagert ist. Dadurch ist die Montage des Lagers sehr aufwendig. Darüber hinaus ist die Drehwelle als zusätzliches Bauteil erforderlich.

Die DE 40 40 287 A1 offenbart eine Drehzahlerfassungseinrichtung, in deren Gehäuseinnenraum ein Magnetträger um eine Drehachse drehbar gelagert ist. Der Magnetträger ist mit einem Magnetring versehen, der an seinem Umfang verteilt Dauermagnetpole besitzt, die an einem im Gehäuse fest angeordneten magnetfeldempfindlichen Sensor vorbei bewegbar sind. Axial zu Drehachse ist am Magnetträger ein aus dem Innenraum des Gehäuses herausragender Antriebszapfen angeordnet, der formschlüssig mit einem freien Ende einer axial zur Drehachse angeordneten Antriebswelle verbunden ist. Die Antriebswelle ist drehbar in einem hülsenartigen Anschlußstück gelagert, welches fest mit dem Gehäuse verbindbar ist. Darüber hinaus wird der Magnetträger axial über eine Lagerkugel am Boden des Gehäuses abgestützt und geführt, wobei der Magnetträger von der Antriebswelle gegen den Boden des Gehäuses verschiebbar ist. Dadurch wird die Lagerung des Magnetträgers und auch die Montage der Drehzahlerfassungseinrichtung erleichtert. Diese vorstehend genannte Lösung hat jedoch den Nachteil, das diese mit einem separaten Getriebeanschluß versehen sein muß, der mindestens aus dem Antriebszahnrad, der Antriebswelle, diversen Dichtungen und Lagern besteht und die Drehzahlerfassungseinrichtung antreibt. Somit sind Abdichtungsmaßnahmen innerhalb des Getriebeanschlusses bzw. des Anschlußstückes gegenüber einer Getriebeeinheit eines Kraftfahrzeugmotors und zusätzliche Lagerbauteile für die Antriebswelle erforderlich. Diese Abdichtungen sind in montagetechnischer Hinsicht sehr aufwendig und kostenintensiv und erfordern einen zusätzlichen Materialeinsatz.

Es ist Aufgabe der Erfindung, eine Einrichtung zur Erfassung der Drehzahl, zur Befestigung an einer Getriebeeinheit, insbesondere eines Kraftfahrzeugmotors, der eingangs genannten Art zu schaffen, die kostengünstig und materialsparend ist und auf einfache Weise montiert werden kann.

Erfindungsgemäß wird die Aufgabe dadurch gelöst, daß das Antriebszahnrad einstückig mit der Antriebswelle ausgebildet ist, welches an zumindest zwei beabstandeten Stellen in einem Anschlußstück gelagert ist, das verdrehfest in das Gehäuse einsetzbar ist, wobei die mit der Drehwelle verbindbare Antriebswelle gegen axiale Verschiebung gesichert ist. Das die einstückig mit dem Antriebszahnrad ausgebildete Antriebswelle aufnehmende Anschlußstück kann nun vormontiert auf einfache Weise in das Gehäuse der Drehzahlerfassungseinrichtung eingesetzt werden, wobei der an einem freien Ende der Drehwelle angeordnete Antriebszapfen formschlüssig in ein stirnseitiges Ende der Antriebswelle eingreift. Vor der Montage wird die Antriebswelle mit dem einstückig angeformten Antriebszahnrad auf einfache Weise in das Anschlußstück eingesetzt. Die Integration dieser Baugruppe durch deren verdrehfestes Einsetzen in das Gehäuse der Drehzahlerfassungseinrichtung wird diese damit kraft- und formschlüssig verbunden. Durch diese Maßnahme sind keine zusätzlichen Abdichtungsmaßnahmen im Bereich des Anschlußstückes in der Getriebeeinheit des Kraftfahrzeugmotors erforderlich. Die Antriebswelle, an die das Antriebszahnrad angespritzt ist, und das Anschlußstück bestehen in der Regel aus Kunststoff und bilden lediglich zwei mit einander zu verbindende Teile, so daß Bauteile und Material eingespart werden können. Dadurch können die Herstellungskosten für die Drehzahlerfassungeinrichtung erheblich gesenkt werden. Durch das einfache Ineinanderstecken dieser Teile erfolgt eine leichte maschinelle Montage.

Um einerseits eine Lagesicherung der Antriebswelle im zugehörigen Anschlußstück zu erreichen und andererseits eine axiale Verschiebung der Drehwelle innerhalb des Gehäuses der Drehzahlerfassungseinrichtung zur erreichen, ist die Antriebswelle an ihrem dem Antriebszahnrad entgegengesetzten freien Ende mit einem Sicherungselement gegen axiale Verschiebung der Antriebswelle versehen, welches sich an der Innenseite des Anschlußstückes abstützt. Zweckmäßigerweise ist das Sicherungselement als Sicherungsscheibe ausgebildet, die in eine entsprechende Umfangsnut am freien Ende der Antriebswelle eingreift. Die Sicherungsscheibe kann beispielsweise ein üblicher und kostengünstig verfügbarer Sprengring sein.

Zur Verbesserung der Gleitfähigkeit der Sicherungsscheibe ist zwischen dieser und dem diese abstützenden Bereich an der Innenseite des Anschlußstückes eine Laufscheibe angeordnet. Diese ist bevorzugt eine Metallscheibe.

Vorzugsweise ist der das Sicherungselement abstützende Bereich an der Innenseite des Anschlußstückes als koaxial zur Drehwelle gerichteter und den vorderen Bereich der Antriebswelle teilweise umgebender Vorsprung ausgebildet. Dadurch wird im Bodenbereich des Anschlußstückes erheblich Material eingespart und die Masse des Anschlußstückes verringert. Dabei kann das Anschlußstück im Bereich der axialen Verbindung zwischen der Antriebswelle und der Drehwelle topfförmig ausgebildet sein, wobei die Öffnung des topfförmigen Teils des Anschlußstückes zum Ringmagneten gerichtet ist.

Zum ermöglichen eines verdrehfesten und abdichtenden Einsetzens des Anschlußstückes in das ebenfalls vorzugsweise topfförmige Gehäuse der Drehzahlerfassungseinrichtung ist der topfförmige Teil des Anschlußstückes umfangseitig mit mindestens einer Rastnase oder einer Rastöffnung versehen, die mit einer dazu korrespondierenden Rastöffnung oder einer Rastnase in der Umfangswand des Gehäuses in Eingriff bringbar ist. Dadurch wird eine Klipsverbindung zwischen dem Anschlußstück und dem Gehäuse hergestellt, so daß eine einfach Montage dieser Teile ermöglicht wird.

Nach einer Weiterbildung der Erfindung weist die Antriebswelle eine in Bezug zur Drehwelle vorderer Lagerstelle mit gegenüber einem mittleren Bereich der Antriebswelle verminderten Durchmesser und eine hintere Lagerstelle mit gegenüber dem mittleren Bereich der Antriebswelle erweiterten Durchmesser auf. Das Vorsehen zweier voneinander beabstandeter Lagerstellen ermöglicht eine Rotation der Antriebswelle im Anschlußstück mit möglichst geringer Reibung. Die Schmierung der Antriebswelle im Anschlußstück erfolgt durch das in der Getriebeeinheit eines Kraftfahrzeugmotors befindliche Öl.

Die axiale Verschiebbarkeit der Drehwelle und somit die axiale Bewegung des Antriebszapfens der Drehwelle in der Antriebswelle wird dadurch unterstützt, daß die Drehwelle federelastisch gegen den Innenraum des Gehäuses abgestützt ist.

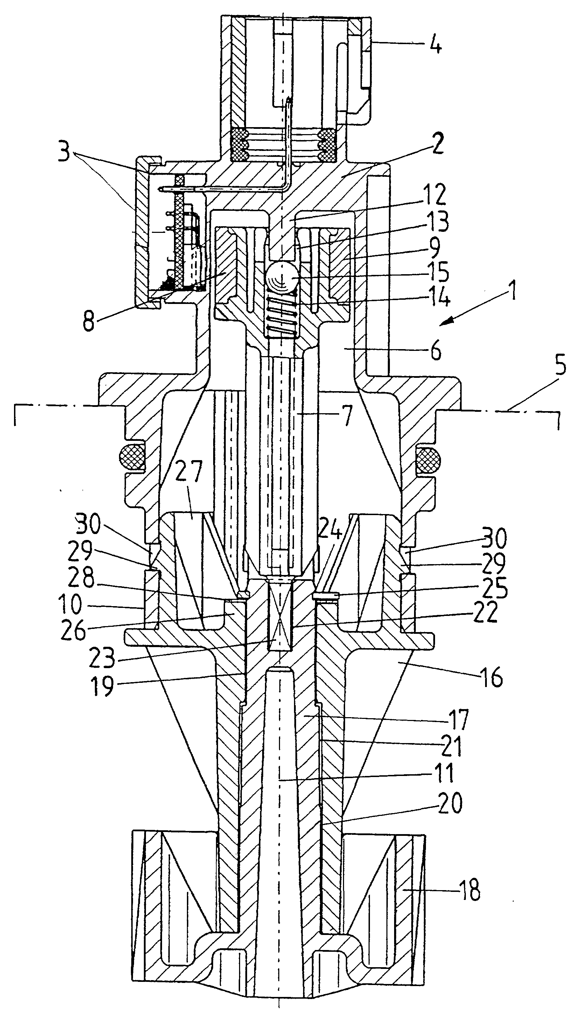

Der der Erfindung zu Grunde liegenden Gedanke wird in der nachfolgenden Beschreibung an Hand eines Ausführungsbeispieles, das in der Zeichnung dargestellt ist, näher beschrieben. Die Zeichnungsfigur zeigt einen Längsschnitt einer erfindungsgemäßen Einrichtung zur Erfassung der Drehzahl insbesondere zur Befestigung an einer Getriebeeinheit eines Kraftfahrzeugmotors.

Die Drehzahlerfassungseinrichtung 1 weist ein topfförmiges Gehäuse 2 auf, in dessen oberen seitlichen Bereich ein magnetempfindlicher Sensor 3 integriert ist. Dieser magnetempfindliche Sensor 3 ist im Gehäuse 2 verkapselt. Über einen Steckanschluß 4 an der oberen Stirnseite des Gehäuses 2 ist die Drehzahlerfassungseinrichtung 1 mit einer nicht dargestellten Signalverarbeitungseinrichtung verbindbar. Das Gehäuse 2 ist in eine durch Strich-Punkt-Strich-Linie dargestellte Getriebeeinheit 5 eines nicht näher gezeigten Kraftfahrzeugmotors einsetzbar. Im Innenraum 6 des Gehäuses 2 ist eine Drehwelle 7 angeordnet. Das obere Ende der Drehwelle 7 ist mit einem Ringmagneten 8 versehen, der mit dem magnetempfindlichen Sensor 3 zusammenwirkt, wobei dieser radial gegenüberliegend in der Umfangswand 10 des Gehäuses 2 angeordnet ist. Durch Drehung der in der Längsachse 11 der Drehzahlerfassungseinrichtung 1 liegenden Drehwelle 7 bewegt sich der Ringmagnet 8 am magnetempflindlichen Sensor 3 vorbei, wobei dieser in Form eines Hall-Schalters ausgebildet ist. Dabei wird jedes vorbeibewegte Magnetfeld eines Dauermagnetpols 9 von dem Sensor 3 erfaßt und ein entsprechendes Signal über den Steckanschluß 4 an die Signalverarbeitungseinrichtung abgegeben.

Von der oberen inneren Stirnseite des Gehäuses 2 ragt ein Lagerzapfen 12 axial zur Längsachse 11 hervor und in eine dazu korrespondierende Führungsausnehmung 13 am oberen Ende der Drehwelle 7 hinein. Durch eine am Boden der Führungsausnehmung 13 abgestützte, als Wendelfeder ausgebildete Druckfeder 14, wird eine Lagerkugel 15 entlang der Längsachse 11 gegen den Lagerzapfen 12 gedrückt. Somit ist die Drehwelle 7 entlang der Längsachse 11 der Drehzahlerfassungseinrichtung 1 zum Zwecke des Toleranzausgleiches innerhalb des Gehäuses 2 axial verschiebbar.

Die Drehzahlerfassungseinrichtung 1 umfaßt weiterhin ein in der Getriebeeinheit 5 angeordnetes Anschlußstück 16, welches topfförmig ausgebildet ist. Das Anschlußstück 16 nimmt eine Antriebswelle 17 auf, an die einstückig ein Antriebszahnrad 18 angeformt ist. Dieses Antriebszahnrad 18 wird von einem nicht dargestellten Gegenrad in der Getriebeeinheit 5 angetrieben. Die Antriebswelle 17 weist eine in Bezug zur Drehwelle 7 vordere Lagerstelle 19, eine hintere Lagerstelle 20 und einen mittleren Bereich 21 auf. Gegenüber dem mittleren Bereich 21 der Antriebswelle 17 hat die vordere Lagerstelle 19 einen verringerten und die hintere Lagerstelle 20 einen erweiterten Durchmesser.

Das freie vordere Ende der Antriebswelle 17 ist mit einer im Querschnitt quadratischen Längsnut 22 versehen, in die ein am freien Ende der Drehwelle 7 angeformter Antriebszapfen 23 mit ebenfalls quadratischen Querschnitt eingreift. Da die durch die Druckfeder 14 federbelastete Drehwelle 7 in Bezug zur Längsachse 11 der Drehzahlerfassungseinrichtung 1 axial verschiebbar ist, ist auch der an der Drehwelle 7 angeformte Antriebszapfen 23 in der Längsnut 22 der Antriebswelle 17 verschiebbar.

Am freien Ende der Antriebswelle 17 ist weiterhin eine Umfangsnut 24 eingeformt, in die ein als Scheibe ausgebildetes Sicherungselement 25 eingesetzt ist. An der Innenseite des topfförmigen Anschlußstückes 16 ragt koaxial zur Längsachse 11 ein Vorsprung 26 hin zur Öffnung 27 des topfförmigen Anschlußstückes 16. Zwischen der Unterseite des Sicherungselementes 25 und der Oberseite des Vorsprunges 26 des topfförmigen Anschlußstückes 16 ist eine Laufscheibe 28 aus Metall eingebracht. Durch das Sicherungselement 25 wird die Antriebswelle 17 im Anschlußstück 16 lagegesichert und gleichzeitig durch die Laufscheibe 28 eine leichte Drehbarkeit der Antriebswelle 17 im Anschlußstück 16 ermöglicht.

Der topfförmige Bereich des Anschlußstückes 16 ragt in das topfförmige Gehäuse 2 der Drehzahlerfassungseinrichtung 1 hinein. An vier sich diametral gegenüberliegenden Stellen des topfförmigen Bereiches des Anschlußstückes 16 ist jeweils eine Rastnase 29 einstückig angeformt. Beim Einsetzen des die Antriebswelle 17 mit dem Antriebszahnrad 18 aufnehmenden Anschlußstückes 16 in das Gehäuse 2 der Drehzahlerfassungseinrichtung 1 verrasten die Rastnasen 29 des Anschlußstückes 16 mit dazu korrespondierenden Rastöffnungen 30 in der Umfangswand 10 des Gehäuse 2. Gleichzeitig gelangt der Antriebszapfen 23 der Drehwelle 7 in die Längsnut 22 am freien Ende der Antriebswelle 17.

Liste der Bezugszeichen
- 1: Drehzahlerfassungseinrichtung
- 2: Gehäuse
- 3: Sensor
- 4: Steckanschluß
- 5: Getriebeeinheit
- 6: Innenraum
- 7: Drehwelle
- 8: Ringmagnet
- 10: Umfangswand
- 11: Längsachse
- 12: Lagerzapfen
- 13: Führungsausnehmung
- 14: Druckfeder
- 15: Lagerkugel
- 16: Anschlußstück
- 17: Antriebswelle
- 18: Antriebszahnrad
- 19: vordere Lagerstelle
- 20: hintere Lagerstelle
- 21: mittlerer Bereich
- 22: Längsnut
- 23: Antriebszapfen
- 24: Umfangsnut
- 25: Sicherungselement
- 26: Vorsprung
- 27: Öffnung
- 28: Laufscheibe
- 29: Rastnase
- 30: Rastöffnung

## Patentansprüche

1. Einrichtung zur Erfassung der Drehzahl zur Befestigung an einer Getriebeeinheit (5), insbesondere eines Kraftfahrzeugmotors, mit einem Gehäuse (2), in dessen Innenraum (6) ein Ringmagnet (8) um eine Drehwelle (7) antreibbar gelagert ist, die mit einem im Gehäuse (2) angeordneten magnetempfindlichen Sensor (3) zusammenwirken, wobei die Drehwelle (7) an ihrem freien Ende mit einem axialen Antriebszapfen (23) versehen ist, der formschlüssig mit einem freien Ende einer axial zur Drehwelle (7) verlaufenden Antriebswelle (17) verbindbar ist, die drehbar in der Getriebeeinheit (5) gelagert ist und an ihrem anderen Ende ein Antriebszahnrad (18) aufweist, **dadurch gekennzeichnet, daß** das Antriebszahnrad (18) einstückig mit der Antriebswelle (17) ausgebildet ist, welche an zumindest zwei beabstandeten Stellen (19, 20) in einem Anschlußstück (16) gelagert ist, das verdrehfest in das Gehäuse (2) einsetzbar ist, wobei die mit der Drehwelle (7) verbindbare Antriebswelle (17) gegen axiale Verschiebung gesichert ist.

2. Einrichtung nach Anspruch 1, **dadurch gekennzeichnet, daß** die Antriebswelle (17) an ihrem dem Antriebszahnrad (18) entgegengesetzten freien Ende mit einem Sicherungselement (25) gegen axiale Verschiebung der Antriebswelle (17) versehen ist, daß sich an der Innenseite des Anschlußstückes (16) abstützt.

3. Einrichtung nach Anspruch 2, **dadurch gekennzeichnet, daß** das Sicherungselement (25) als Sicherungsscheibe ausgebildet ist, die in eine entsprechende Umfangsnut (24) am freien Ende der Antriebswelle (17) eingreift.

4. Einrichtung nach einem der Ansprüche 2 bis 3, **dadurch gekennzeichnet, daß** zwischen dem Sicherungselement (25) und dem dieses abstützenden Bereich an der Innenseite des Anschlußstückes (16) eine Laufscheibe (28) angeordnet ist.

5. Einrichtung nach einem der Ansprüche 2 bis 4, **dadurch gekennzeichnet, daß** der das Sicherungselement (25) abstützende Bereich an der Innenseite des Anschlußstükkes (16) als koaxial zur Drehwelle (7) gerichteter und den vorderen Bereich der Antriebswelle (17) teilweise umgebender Vorsprung (26) ausgebildet ist.

6. Einrichtung nach einem der Ansprüche 1 bis 5, **dadurch gekennzeichnet, daß** das Anschlußstück (16) im Bereich der axialen Verbindung zwischen der Antriebswelle (17) und der Drehwelle (7) topfförmig ausgebildet ist, wobei die Öffnung (27) des topfförmigen Teils des Anschlußstückes (16) zum Ringmagneten (8) gerichtet ist.

7. Einrichtung nach Anspruch 6, **dadurch gekennzeichnet, daß** der topfförmige Teil des Anschlußstückes (16) umfangseitig mit mindestens einer Rastnase (29) oder einer Rastöffnung (30) versehen ist, die mit einer dazu korrespondierenden Rastöffnung (30) oder einer Rastnase (29) in der Umfangswand (10) des Gehäuses (2) in Eingriff bringbar ist.

8. Einrichtung nach einem der Ansprüche 1 bis 7, **dadurch gekennzeichnet, daß** die Antriebswelle (17) eine in Bezug zur Drehwelle (7) vordere Lagerstelle (19) mit Gegenüber einem mittleren Bereich (21) der Antriebswelle (17) verminderten Durchmesser und eine hintere Lagerstelle (20) mit gegenüber dem mittleren Bereich (21) der Antriebswelle (17) erweiterten Durchmesser aufweist.

9. Einrichtung nach einem der Ansprüche 1 bis 8, **dadurch gekennzeichnet, daß** die Drehwelle (7) mit ihrem Antriebszapfen (23) in Bezug zur Antriebswelle (17) axial verschiebbar und gegenüber dieser verdrehfest darin gelagert ist.

10. Einrichtung nach einem der Ansprüche 1 bis 9, **dadurch gekennzeichnet, daß** die Drehwelle (7) federelastisch (14) gegen den Innenraum (6) des Gehäuses (2) abgestützt ist.

11. Einrichtung nach einem der Ansprüche 1 bis 10, **dadurch gekennzeichnet, daß** das Anschlußstück (16) mit der einstückig mit dem Antriebszahnrad (18) ausgebildeten Antriebswelle (17) als separate, vormontierte Baugruppe in das Gehäuse (2) einsetzbar ist.

## Claims

1. Device for detecting the rotational speed, for mounting on a gear unit (5), in particular of a motor-vehicle engine, having a housing (2) in whose interior (6) a ring magnet (8) [lacuna] is mounted in a manner such that it can be driven about a rotational shaft (7), the said [lacuna] interacting with a magnet-sensitive sensor (3) arranged in the housing (2), the rotational shaft (7) being provided at its free end with an axial drive pin (23) which can be connected in a form-fitting manner to a free end of a drive shaft (17) which runs axially with respect to the rotational shaft (7), is mounted rotatably in the gear unit (5) and at its other end has a drive gearwheel (18), **characterized in that** the drive gearwheel (18) is formed integrally with the drive shaft (17) which is mounted at at least two spaced apart points (19, 20) in a connecting component (16) which can be inserted in a twist-proof manner into the housing (2), the drive shaft (17), which can be connected to the rotational shaft (7), being secured against axial displacement.

2. Device according to Claim 1, **characterized in that** the drive shaft (17) is provided at its free end, which is opposite the drive gearwheel (18), with a securing element (25) against axial displacement of the drive shaft (17) that is supported on the inside of the connecting component (16).

3. Device according to Claim 2, **characterized in that** the securing element (25) is designed as a securing washer which engages in a corresponding circumferential groove (24) at the free end of the drive shaft (17).

4. Device according to one of Claims 2 to 3, **characterized in that** a moving disc (28) is arranged between the securing element (25) and the region supporting the latter on the inside of the connecting component (16).

5. Device according to one of Claims 2 to 4, **characterized in that** the region supporting the securing element (25) on the inside of the connecting component (16) is designed as a projection (26) which is directed coaxially with respect to the rotational shaft (7) and partially surrounds the front region of the drive shaft (17).

6. Device according to one of Claims 1 to 5, **characterized in that** the connecting component (16) in the region of the axial connection between the drive shaft (17) and the rotational shaft (7) is of cup-shaped design, the opening (27) of the cup-shaped part of the connecting component (16) being directed towards the ring magnet (8).

7. Device according to Claim 6, **characterized in that** the cup-shaped part of the connecting component (16) is provided circumferentially with at least one latching lug (29) or a latching opening (30) which can be brought into engagement with a corresponding latching opening (30) or latching lug (29) in the circumferential wall (10) of the housing (2).

8. Device according to one of Claims 1 to 7, **characterized in that** the drive shaft (17) has a front bearing (19), with regard to the rotational shaft (7), having a reduced diameter in comparison with a central region (21) of the drive shaft (17) and a rear bearing (20) with an expanded diameter in comparison with the central region (21) of the drive shaft (17).

9. Device according to one of Claims 1 to 8, **characterized in that** the rotational shaft (7) can be displaced axially by its drive pin (23) with regard to the drive shaft (17) and is mounted therein in a twist-proof manner with respect to the latter.

10. Device according to one of Claims 1 to 9, **characterized in that** the rotational shaft (7) is supported in a spring-elastic manner (14) against the interior (6) of the housing (2).

11. Device according to one of Claims 1 to 10, **characterized in that** the connecting component (16) can be inserted into the housing (2) together with the drive shaft (17), which is formed integrally with the drive gearwheel (18), as a separate, preassembled subassembly.

## Revendications

1. Dispositif pour capter la vitesse de rotation, destiné à être fixé à une unité de transmission (5), en particulier d'un moteur de véhicule automobile, comprenant un boîtier (2) dans le volume intérieur (6) duquel un aimant annulaire (8) est monté en pouvant être entraîné autour d'un arbre rotatif (7), qui coopèrent avec un capteur (3) sensible au magnétisme disposé dans le boîtier (2), l'arbre rotatif (7) étant muni à son extrémité libre d'un téton d'entraînement axial (23) qui peut être relié par une liaison opérant par conjugaison de formes à une extrémité libre d'un arbre d'entraînement (17) qui s'étend axialement par rapport à l'arbre rotatif (7), est monté rotatif dans l'unité de transmission (5) et présente une roue dentée d'entraînement (18) à son extrémité libre, **caractérisé en ce que** la roue dentée d'entraînement (18) est réalisée en une seule pièce avec l'arbre d'entraînement (17), au moins deux zones espacées (19, 20) dans un élément de raccordement (16) servant de palier à l'arbre d'entraînement, l'élément de raccordement pouvant être monté bloqué en rotation dans le boîtier (2), l'arbre d'entraînement (17), qui peut être relié à l'arbre rotatif (7), étant immobilisé à rencontre de la translation axiale.

2. Dispositif selon la revendication 1, **caractérisé en ce que** l'arbre d'entraînement (17) est muni à son extrémité libre qui est à l'opposé de la roue dentée d'entraînement (18), d'un élément d'arrêt (25) s'opposant à la translation axiale de l'arbre d'entraînement (17), qui prend appui contre le côté intérieur de l'élément de raccordement (16).

3. Dispositif selon la revendication 2, **caractérisé en ce que** l'élément d'arrêt (25) est formé d'une rondelle d'arrêt qui est engagée dans une gorge circonférentielle correspondante (24) prévue à l'extrémité libre de l'arbre d'entraînement (17).

4. Dispositif selon une des revendications 2 à 3, **caractérisé en ce qu'**une rondelle de portée (28) est prévue entre l'élément d'arrêt (25) et la région du côté intérieur de l'élément de raccordement (16) qui lui donne appui.

5. Dispositif selon une des revendications 2 à 4, **caractérisé en ce que** la région située sur le côté intérieur de l'élément de raccordement (16) et qui donne appui à l'élément d'arrêt (25) est constituée par un bossage (26) orienté coaxialement à l'arbre rotatif (7) et qui entoure partiellement la région avant de l'arbre d'entraînement (17).

6. Dispositif selon une des revendications 1 à 5, **caractérisé en ce que** l'élément de raccordement (16) est réalisé en forme de godet dans la région de la liaison axiale entre l'arbre d'entraînement (17) et l'arbre rotatif (7), l'ouverture (27) de la partie en godet de l'élément de raccordement (16) étant dirigée vers l'aimant annulaire (8).

7. Dispositif selon la revendication 6, **caractérisé en ce que** la partie en forme de godet de l'élément de raccordement (16) est munie sur sa périphérie d'au moins une dent de verrouillage (29) ou d'une ouverture de verrouillage (30) qui peut être mise en prise avec une ouverture de verrouillage (30) ou une dent de verrouillage (29) correspondante de la paroi circonférentielle (10) du boîtier (2).

8. Dispositif selon une des revendications 1 à 7, **caractérisé en ce que** l'arbre d'entraînement (17) présente une zone de palier avant (19), relativement à l'arbre rotatif (7), qui présente un diamètre réduit comparativement à une région médiane (21) de l'arbre d'entraînement (17) et une zone de palier arrière (20) possédant un diamètre agrandi par rapport à la région médiane (21) de l'arbre d'entraînement (7).

9. Dispositif selon une des revendications 1 à 8, **caractérisé en ce qu'**au moyen de son téton d'entraînement (23), l'arbre rotatif (7) est monté mobile en translation axiale par rapport à l'arbre d'entraînement (17) et est monté solidairement en rotation par rapport à celui-ci.

10. Dispositif selon une des revendications 1 à 9, **caractérisé en ce que** l'arbre rotatif (7) est appuyé avec une élasticité de ressort (14) contre le volume intérieur (6) du boîtier (2).

11. Dispositif selon une des revendications 1 à 10, **caractérisé en ce que** l'élément de raccordement (16) avec l'arbre d'entraînement (17) formé en une seule pièce avec la roue dentée d'entraînement (18), peut être inséré dans le boîtier (2) sous la forme d'un module séparé, prémonté.
